# EUROPEAN PATENT APPLICATION

(11) **EP 1 289 218 A2**
(43) Date of publication of application: **05.03.2003**
(21) Application number: 02019126.8
(22) Date of filing: 29.08.2002
(51) Int. Cl.: H04L 27/26

(54) **Method and circuit for the mapping of data to subcarriers**

(30) Priority: 31.08.2001 JP 2001263362
(71) Applicant: NEC CORPORATION, Tokyo (JP)
(72) Inventor: Sato, Hidenao, Minato-ku, Tokyo (JP)
(74) Representative: Glawe, Delfs, Moll & Partner

(57) **Abstract**

A tone ordering circuit (**100**) that may be capable of performing tone ordering with a small bit table has been disclosed. Tone ordering circuit (**100**) may include a parallel-serial conversion circuit (**10**), a bit table (**11**), a pointer circuit(**12**), a carrier counter circuit (**13**), a comparator (**14**), and a serial-parallel conversion circuit (**15**). Tone ordering circuit (**100**) may receive baseband data and may provide tone ordering data having a bit width in accordance with a corresponding one of a plurality of carriers. Bit widths and carriers may be arranged in ascending order. Bit table (**11**) may store a point at which a bit width of tone ordering data may be changed. In this way, bit widths corresponding to all tone ordering numbers may not be stored in a bit table (**11**) and the density of a bit table (**11**) may be reduced. By accessing bit table (**11**), a control circuit (pointer circuit (**12**), carrier counter circuit (**13**), and comparator (**14**)) may provide a bit width number to a serial-parallel conversion circuit (**15**) to provide tone ordering data according to a desired bit width.

## Description

### TECHNICAL FIELD

The present invention relates generally to a tone ordering circuit and a tone ordering method for an xDSL, and more particularly to a technique that may reduce the circuit scale of a tone ordering circuits.

### BACKGROUND OF THE INVENTION

Widespread use of the Internet has created demand for improved speed of an Internet access system, for example, by improving a transmission system between a telephone station or substation and a subscriber's home. One technique of providing an access system having high user bandwidth and access speeds is an ADSL (Asymmetric Digital Subscriber Line) system. An ADSL system has been developed and is being put to practical use.

A DMT (Discrete Multi-Tone) scheme is one type of a multi-carrier modulation/demodulation scheme that is used as a representative modulation/demodulation scheme in an ADSL system. The DMT scheme may be a QAM (Quadrature Amplitude Modulation) scheme utilizing a plurality of sub-carriers (hereinafter simply referred to as the "carriers") that are uniformly spaced on a frequency axis. Each of a transmitter and a receiver has a plurality of sub-channels that each correspond to the plurality of carriers. The transmitter performs an inverse Fourier conversion on a signal and sends the processed signal to a transmission line. The receiver performs a Fourier conversion on the signal from the transmission line and fetches the processed signal.

The bit width (referred hereinafter to as the "transmission bit number") of transmission data assigned to each sub-channel (carrier) is determined in accordance with a transmission characteristic of a line for each sub-channel. The transmission characteristic determining transmission bit number is the SN (signal to noise) ratio of the line. The measurement of the transmission characteristic of the line is automatically performed during a well-known procedure for tuning the transmitter and receiver.

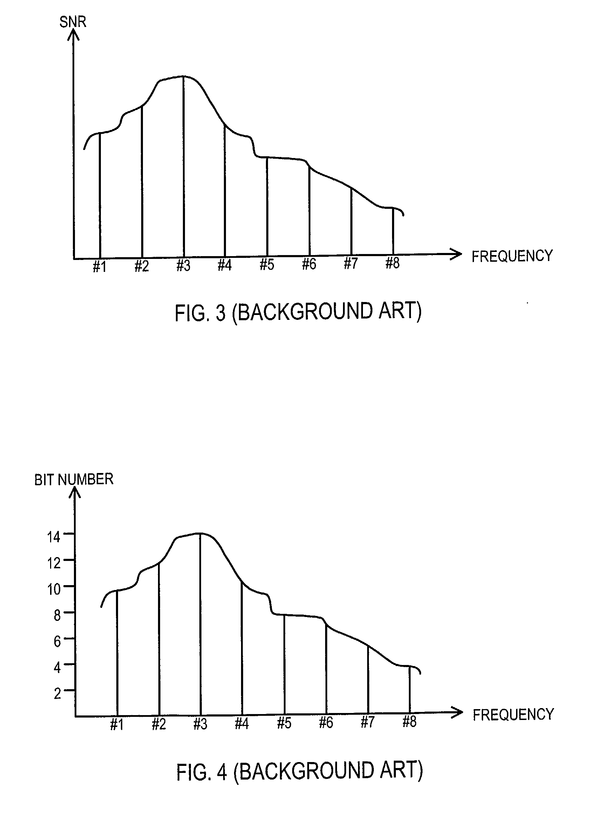

Referring now to FIG. 3, a graph of the transmission characteristic of a line is set forth. As illustrated in FIG. 3 the SN ratios (SNRs) of respective carriers differ from each other. Note, that although 256 carriers are used for ADSL, only 8 carriers (carrier number # 1 to #8) are shown in FIG. 3 for convenience.

On the basis of the SN ratios, the number of bits that can be assigned (mapped) to the carriers may be determined using Shannon's theorem. FIG. 4 is a graph of an example of transmission bit numbers mapped to respective carriers.

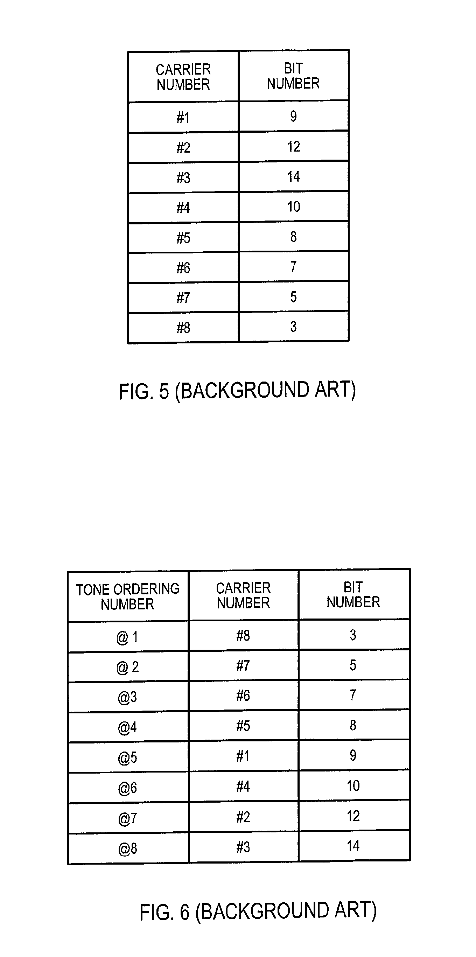

In this way, a transmission bit number is assigned to each sub-channel. Each carrier is performed by arranging and storing each transmission bit number in a table as shown in FIG. 5. FIG. 5 is a table illustrating the carrier number in ascending order and the bit number assigned.

A process for sorting the contents of the table of FIG. 5 is referred to as "tone ordering." FIG. 6 is a table illustrating the tone ordering process. During tone ordering, tone ordering numbers (@1 to @8) are assigned in an ascending order with respect to transmission bit numbers. FIG. 7 is a graph illustrating the relationship between the transmission bit numbers and the tone ordering numbers after the tone ordering process is executed.

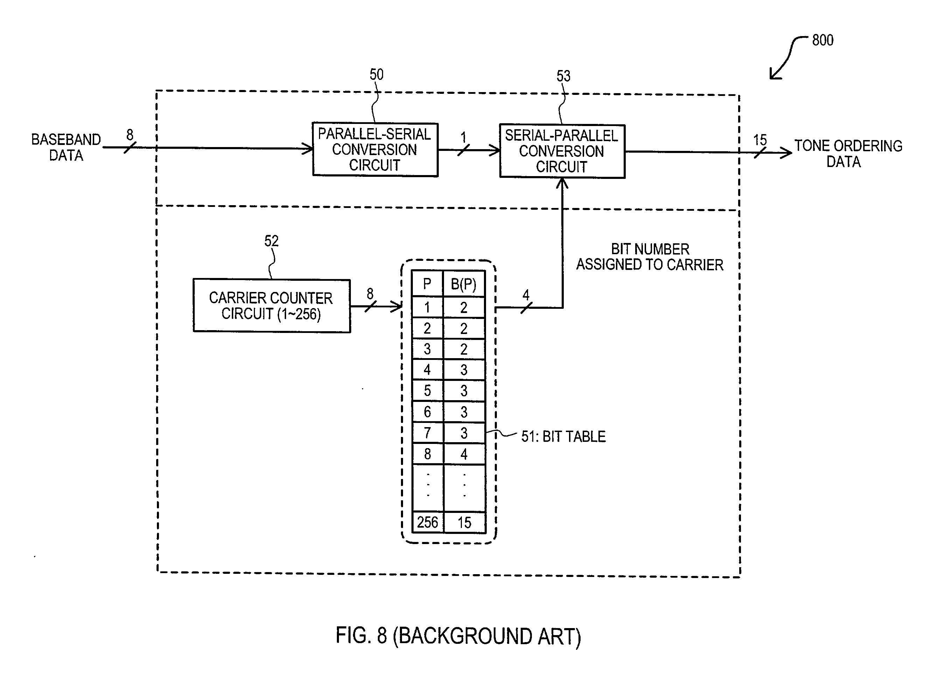

Referring now to FIG. 8 a block schematic diagram of a conventional tone ordering circuit is set forth and given the general reference character **800**.

Conventional tone ordering circuit **800** includes a parallel-serial conversion circuit **50**, a bit table **51**, a carrier counter circuit **52**, and a serial-parallel conversion circuit **53**.

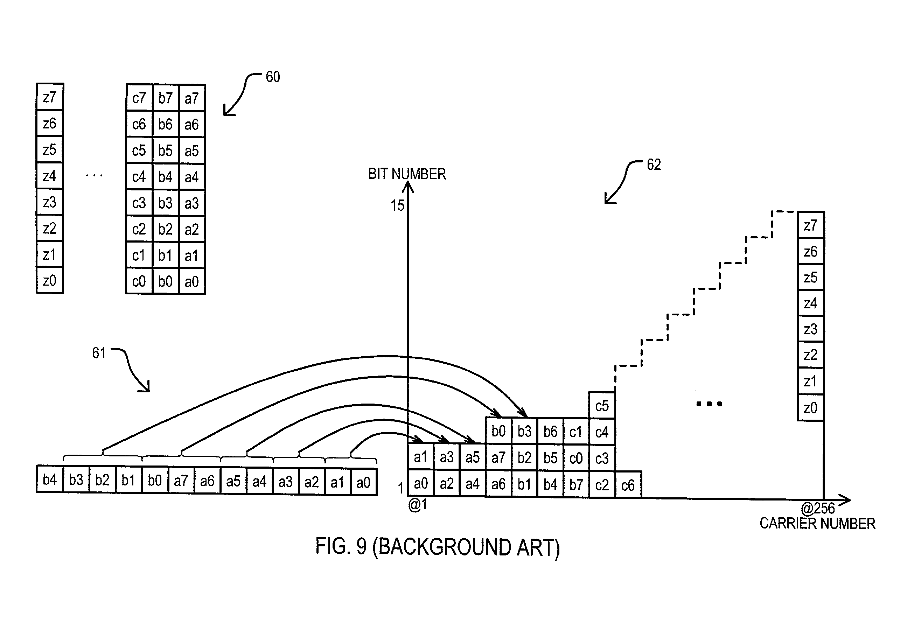

FIG. 9 illustrates the operation of parallel-serial conversion circuit **50** and serial-parallel conversion circuit **53**. Parallel-serial conversion circuit **50** receives parallel data (hereinafter referred to as "baseband data") **60** having an 8-bit width sent from an baseband unit (not shown) and provides serial data **61** one bit at a time. Serial data **61** is received by serial-parallel conversion circuit **53**.

Referring once again to FIG. 8, bit table **51** stores the transmission bit number assigned to each of the 256 carriers. Bit table **51** stores the tone ordering number P given to each carrier and the transmission bit number B(P) assigned to each carrier. The tone ordering number P and transmission bit number B(P) are associated with each other for each carrier. During this operating, the smallest tone ordering number is given to the smallest transmission bit number and the tone ordering number is increased in succession. The transmission bit number B(P) is composed of 4 bits and is capable of specifying parallel data whose maximum bit width is 16 bits. Accordingly, bit table **51** has a 4-bit x 256-word capacity.

An output of carrier counter circuit **52** provides a pointer for bit table **51**. A transmission bit number read from a position of bit table **51** corresponding to the pointer provided by carrier counter circuit **52** is provided to serial-parallel conversion circuit **53**.

Carrier counter circuit **52** performs a count-up operation at predetermined intervals and outputs its contents as the tone ordering numbers. Tone ordering numbers provided from carrier counter circuit **52** are provided to bit table **51** and used as address pointers.

Referring to FIG. 9 in conjunction with FIG. 8, parallel-serial conversion circuit **50** provides serial data **61** one bit at a time to serial-parallel conversion circuit **53**. Serial-parallel conversion circuit **53** converts the received serial data **51** into parallel data **62** with a bit width specified by a transmission bit number provided by bit table **51** and outputs the parallel data **62** as tone ordering data. The bit-width of the transmission bit number is variable in a range of 2 to 15 bits.

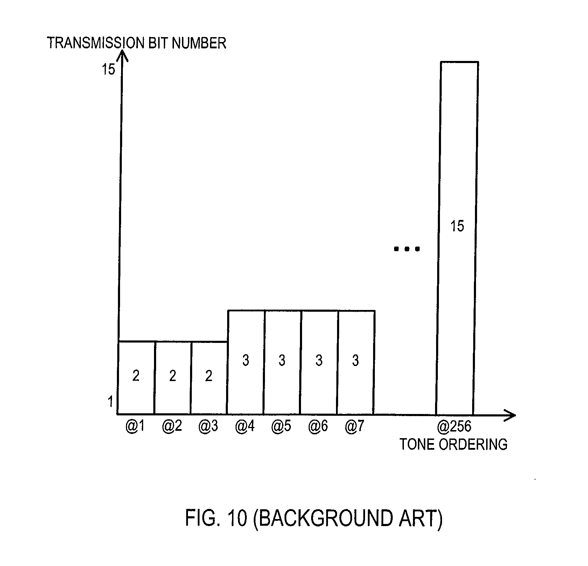

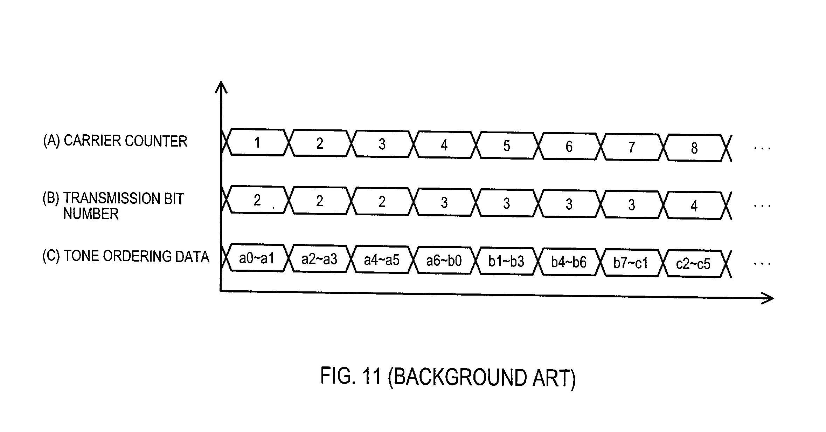

Next, the operation of conventional tone ordering circuit **800** will be described with reference to FIGS. 10 and 11 in conjunction with FIG. 8.

FIG. 10 is a graph illustrating tone ordering of a conventional tone ordering circuit. FIG. 11 is a timing diagram illustrating the operation of a conventional tone ordering circuit.

First, a host apparatus (not shown) sets "1" in carrier counter circuit **52** as an initial value. Also, in bit table **51**, 256-word data is set as an initial value. In this way, transmission bit numbers are paired with respective tone ordering numbers as described above.

When the setting of the initial values in carrier counter circuit **52** is finished, parallel-serial conversion circuit **50** converts baseband data into serial data. The baseband data has an 8-bit width and is provided by a baseband unit (not shown). Parallel-serial conversion circuit **50** provides the serial data one bit at a time to serial parallel conversion circuit **15**.

As illustrated in FIG. 11(A), carrier counter circuit **52** starts a count-up operation in synchronization with the start of the conversion operation by parallel serial conversion circuit **50.** Carrier counter circuit **52** starts a count-up operation from an initial value "1". That is, carrier counter circuit **52** first outputs a "1" as a tone ordering number and provides it to bit table **51**. By using the received "1" as a pointer P, bit table **51** provides a "2" as a transmission bit number to serial parallel conversion circuit **53,** as shown in FIG. 11(B).

Serial-parallel conversion circuit **53** outputs parallel data with a 2-bit width as data that should be transmitted using a carrier assigned the tone ordering number @1. In more detail, serial-parallel conversion circuit **53** outputs parallel data composed of the first two bits (bits a0 and a1) of the first one byte of the baseband data as tone ordering data, as shown in FIG. 11(C).

When the sending of the 2-bit tone ordering data described above is finished, carrier counter circuit **52** is incremented. As a result, the carrier counter circuit **52** outputs a "2" as a tone ordering number and provides it to bit table **51.** As shown in FIG. 11(B), by using the received "2" as a pointer P, bit table **51** provides a "2" as a transmission bit number to serial parallel conversion circuit **53**.

Serial-parallel conversion circuit **53** outputs parallel data with a 2-bit width as data that should be transmitted using a carrier assigned the tone ordering number @2. In more detail, serial-parallel conversion circuit **53** outputs parallel data composed of two bits (bits a2 and a3) of the first one byte of the baseband data as tone ordering data, as shown in FIG. 11(C).

Following this, the same operation is repeated. As a result of these operations, as shown in FIG. 10, received baseband data is converted into parallel data. The conversion is performed in ascending order of the transmission bit numbers. This parallel data is then provided by conventional tone ordering circuit **800** as tone ordering data.

Conventional tone ordering circuit **800** constructed in the manner described above requires a bit table **51** having a capacity obtained by multiplying 4 bits by the number of carriers. Accordingly, the size of the bit table **51** is increased in accordance with an increase of the number of carriers dealt with by conventional tone ordering circuit **800**. For example, in the case of ADSL, 256 carriers are dealt with at the maximum. In this case, it is required to use a bit table **51** whose size is 4-bits x 256-words = 1024 bits.

If conventional tone ordering circuit **800** is constructed using a large scale integrated circuit (LSI), it is possible to construct bit table **51** using a register or the like if the capacity of bit table **51** is small. However, if the capacity of bit table **51** is increased, the use of a register, or the like, to construct bit table **51** can be unfeasible due to space constraints. In this case, it may be necessary to construct bit table **51** using a random access memory (RAM). As a result, the manufacturing process may become complicated.

In view of the above discussion, it would be desirable to provide a tone ordering circuit that is capable of performing tone ordering using a small bit table as compared to conventional approaches.

### SUMMARY OF THE INVENTION

According to the present embodiments, a tone ordering circuit may be capable of performing tone ordering with a small bit table. A tone ordering circuit may include a parallel-serial conversion circuit, a bit table, a pointer circuit, a carrier counter circuit, a comparator), and a serial-parallel conversion circuit. The tone ordering circuit may receive baseband data and may provide tone ordering data having a bit width in accordance with a corresponding one of a plurality of carriers. Bit widths and carriers may be arranged in ascending order. A bit table may store a point at which a bit width of tone ordering data may be changed. In this way, bit widths corresponding to all tone ordering numbers may not be stored in a bit table and the density of a bit table may be reduced. By accessing a bit table, a control circuit (a pointer circuit, a carrier counter circuit, and a comparator) may provide a bit width number to a serial-parallel conversion circuit to provide tone ordering data according to a desired bit width.

According to one aspect of the embodiments, a tone ordering circuit for an xDSL may convert serial data into parallel data having predetermined bit widths arranged in ascending order. The parallel data may be transmittable using each of a plurality of carriers. The tone ordering circuit may include a table, a control circuit and a serial-parallel conversion circuit. A table may store information specifying a point in time when the bit width of the parallel data changes. A control circuit may determine a bit width of the parallel data on the basis of the information stored in the table. A serial-parallel conversion circuit may convert the serial data into parallel data having the bit width determined by the control circuit.

According to another aspect of the embodiments, the table may store, as the information, a tone ordering number. The tone ordering number may provide the point in time when the bit width of the parallel data changes and may be assigned to each of the carriers in an ascending order of the bit widths of the parallel data to be transmitted using the carriers.

According to another aspect of the embodiments, the control circuit may include a pointer circuit, a carrier counter circuit, and a comparator. A pointer circuit may generate a pointer address. The pointer address may specify a location at which data is stored in the table and provides the pointer address to the table. A carrier counter circuit may count up the tone ordering number at predetermined intervals. A comparator may compare the data stored at the location in the table specified by the pointer address with the tone ordering number provided by the carrier counter circuit. If a matching result is obtained by the comparator, the contents of the pointer circuit may be incremented and the bit width of the parallel data may be changed.

According to another aspect of the embodiments, the control circuit may change the bit width of the parallel data by supplying a value for the pointer address generated by the pointer circuit to the serial-parallel conversion circuit as the bit width of the parallel data.

According to another aspect of the embodiments, the tone ordering circuit may include a parallel-serial conversion circuit. The parallel-serial conversion circuit may convert baseband data received as parallel data into the serial data provided to the serial-parallel conversion circuit.

According to another aspect of the embodiments, the table may include a plurality of registers storing the information.

According to another aspect of the embodiments, a tone ordering method for an xDSL may convert serial data into parallel data having predetermined bit widths arranged in ascending order. The parallel data may be transmittable using each of a plurality of carriers. The tone ordering method may include the steps of storing information indicating a point when changing of the bit widths of the parallel data is to be performed, determining a bit width of the parallel data on the basis of the stored information, and converting the serial data into parallel data having the determined bit width.

According to another aspect of the embodiments, the information may include a tone ordering number that provides a point when the bit widths of the parallel data is changed. The tone ordering number may be assigned to each of the carriers in ascending order of the bit widths of the parallel data to be transmitted using the carriers.

According to another aspect of the embodiments, the step of determining a bit width may include generating a pointer address to select data from the stored information.

According to another aspect of the embodiments, the step of determining a bit width may include incrementing a tone ordering number.

According to another aspect of the embodiments, the step of determining a bit width may include comparing the tone ordering number and the selected data.

According to another aspect of the embodiments, the step of determining a bit width may include incrementing the pointer address in response to a match when comparing the tone ordering number and the selected data.

According to another aspect of the embodiments, the pointer address may correspond to the bit width of the parallel data.

According to another aspect of the embodiments, a tone ordering circuit may include a serial-parallel conversion circuit and a pointer circuit. The serial-parallel conversion circuit may receive serial data and provide tone ordering data having a bit width based on a bit width indicator. A pointer circuit may provide a pointer address to a table to select a data value indicating a point at which the bit width indicator changes.

According to another aspect of the embodiments, the pointer address may be the bit width indicator.

According to another aspect of the embodiments, the tone ordering circuit may include a counter circuit. The counter circuit may provide a counter output. The bit width indicator may incrementally change in response to the counter output corresponding to the data value.

According to another aspect of the embodiments, the tone ordering circuit may include a comparator. The comparator may compare the counter output and the data value and provide a match signal. The bit width indicator may incrementally change in response to the match signal indicating a match.

According to another aspect of the embodiments, the bit width indicator changes incrementally in an ascending order.

According to another aspect of the embodiments, the tone ordering circuit may be part of an xDSL system.

According to another aspect of the embodiments, the table may include a plurality of registers and the tone ordering circuit may be on an integrated circuit.

### BRIEF DESCRIPTION OF THE DRAWINGS

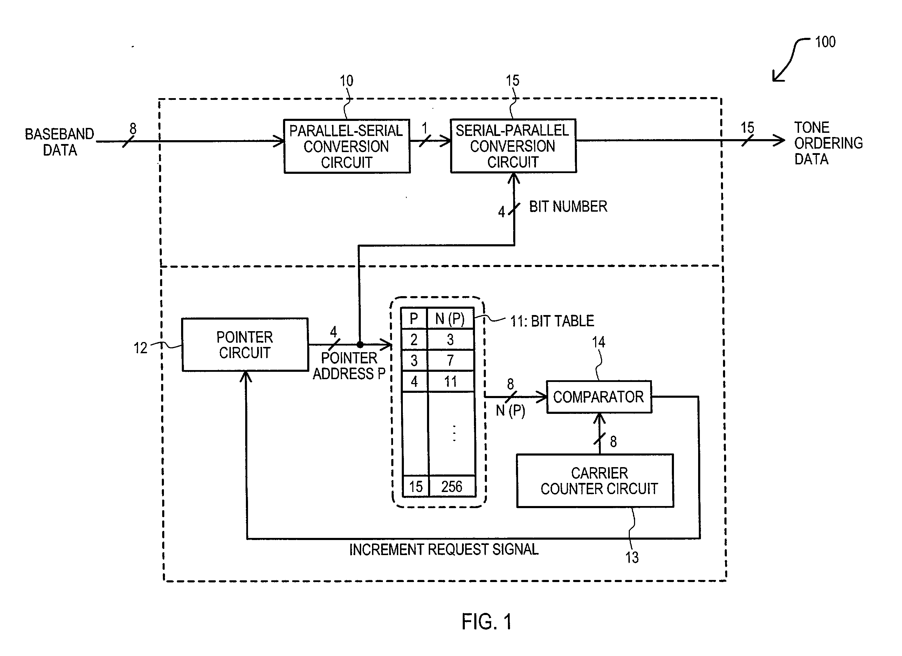

FIG. 1 is a block schematic diagram of a tone ordering circuit according to an embodiment.

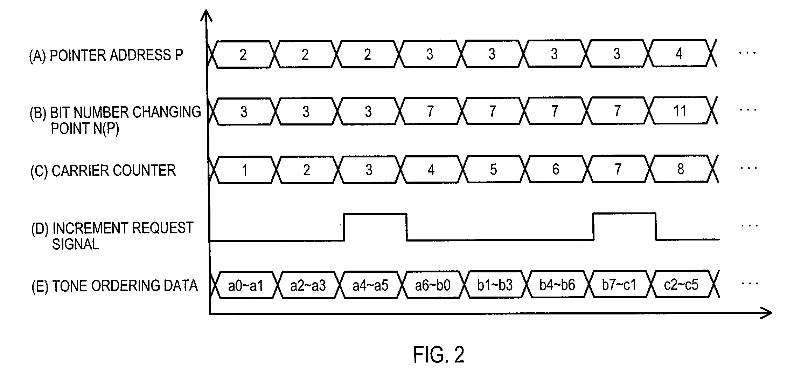

FIG. 2 is timing diagram according to an embodiment illustrating the operation of the tone ordering circuit of FIG. 1.
FIG. 3 is a graph of the transmission characteristic of a line.
FIG. 4 is a graph of an example of transmission bit numbers mapped to respective carriers.
FIG. 5 is a table illustrating the carrier number in ascending order and the bit number assigned.
FIG. 6 is a table illustrating a tone ordering process.

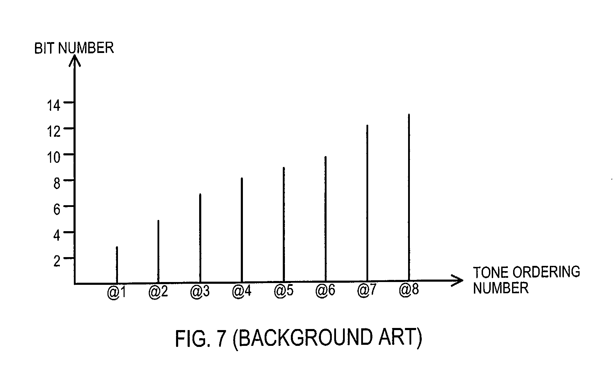

FIG. 7 is a graph illustrating the relationship between the transmission bit numbers and the tone ordering numbers after the tone ordering process is executed.
FIG. 8 is a block schematic diagram of a conventional tone ordering circuit.
FIG. 9 is a diagram illustrating the operation of a parallel-serial conversion circuit.
FIG. 10 is a graph illustrating tone ordering of a conventional tone ordering circuit.
FIG. 11 is a timing diagram illustrating the operation of a conventional tone ordering circuit.

### DETAILED DESCRIPTION OF THE EMBODIMENTS

Various embodiments of the present invention will now be described in detail with reference to a number of drawings.

Referring now to FIG. 1 a block schematic diagram of a tone ordering circuit according to an embodiment is set forth and given the general reference character **100**. Tone ordering circuit **100** may be used in an xDSL system, as just one example.

Tone ordering circuit **100** may include a parallel-serial conversion circuit **10**, a bit table **11**, a pointer circuit **12**, a carrier counter circuit **13**, a comparator **14**, and a serial-parallel conversion circuit **15**.

Parallel-serial conversion circuit **10** may receive baseband data from a baseband unit (not illustrated). The baseband data may be transmitted in parallel having a bit width of 8 bits. Parallel-serial conversion circuit **10** may convert the parallel received 8 bits of baseband data into serial data. In this way, parallel-serial conversion circuit 10 may provide serial data to serial-parallel conversion circuit **15** one bit at a time.

Bit table **11** may store transmission bit numbers P and tone ordering numbers N(P). The transmission bit numbers P may be associated with a tone ordering number N(P).

Bit table **11** may be created as described below. First, as described in the background with reference to FIG. 4, a transmission bit number is assigned to each carrier. Next, as described in the background with reference to FIG. 7, the carriers are arranged in ascending order of assigned transmission bit numbers. Then, tone ordering numbers N(P) from @1 to @256 are given to the carriers in the ascending order of assigned transmission bit numbers.

Next, each tone ordering number corresponding to a point at which the next transmission bit number should be changed is stored so as to be associated with the limit of the tone ordering number having that transmission bit number. The operation described above may be performed for every carrier. In this way, bit table **11** may be created.

In the example of a bit table **11** shown in FIG. 1, transmission bit number P having a value of "2" is associated with a tone ordering number N(P) having a value of "3". This means that the carriers, whose tone ordering numbers N(P) are in a range of from "1" to "3" may each be assigned two bits as the transmission bit number P.

In a similar manner, transmission bit number P having a value of "3" is associated with a tone ordering number N(P) having a value of "7". This means that the carriers, whose tone ordering numbers N(P) are in a range of from "4" to "7" may each be assigned three bits as the transmission bit number P. Following this, and in a similar manner, predetermined values selected from "11 to 256" may be stored as tone ordering number N(P) to be the maximum tone ordering number N(P) having a corresponding transmission bit number P. In this way, for the particular tone order example described, bit table 11 may have a capacity of 8-bits x 14-words.

Pointer circuit **12** may provide a pointer address **P** for addressing bit table **11.** Pointer circuit **12** may be constructed from a counter and may have contents incremented in response to an increment request signal provided from comparator **14**. The output from pointer circuit **12** may be provided to bit table **11** and serial-parallel conversion circuit **15**.

Carrier counter circuit **13** may include an 8-bit counter and may perform a count-up operation at predetermined intervals. Carrier counter circuit **13** may output tone ordering numbers having a range of from 1 to 256. The tone ordering number provided from carrier counter circuit **13** may be provided to comparator **14**.

Comparator **14** may compare a tone ordering number N(P) provided from bit table **11** in response to pointer address P with a tone ordering number provided from carrier counter circuit **13**. If a matching result is obtained, comparator **14** may provide an increment request signal having an active logic level (high level in this case). Increment request signal may be provided to the above-described pointer circuit **12**.

Serial-parallel conversion circuit **15** may convert serial data provided from parallel-serial conversion circuit **50** one bit at a time into parallel data having a bit width specified by pointer address P provided by pointer circuit **12**. Serial-parallel conversion circuit **15** may provide the parallel data externally as tone ordering data. Pointer address P may correspond to a transmission bit number.

FIG. 2 is a timing diagram illustrating the operation of tone ordering circuit **100**.

The operation of tone ordering circuit **100** according to an embodiment will now be described with reference to the timing diagram of FIG. 2 in conjunction with FIG. 1.

First, a host apparatus (not illustrated) may set a "2" as an initial value of pointer address P in pointer circuit **12**. Also, 14-word data may be set as an initial value in bit table **11** using a procedure as described above. The 14-word data may include transmission bit numbers being paired with respective tone ordering numbers.

When the setting of the initial values in bit table **11** is completed, parallel-serial conversion circuit **10** may convert baseband data into serial data. The baseband data may have an 8-bit width and may be provided by a baseband unit (not illustrated). Serial data converted by parallel-serial conversion circuit **10** may be provided to serial-parallel conversion circuit **15** one bit at a time.

In synchronism with the start of the conversion operation by serial-parallel conversion circuit **15**, carrier counter circuit **13** may start a count-up operation from an initial value "1", as illustrated in FIG. 2(C). An interval between successive count-up operations by carrier counter circuit **13** may be hereinafter referred to as a "cycle". Each cycle may be called an nth cycle in correspondence to the contents n ("n" is a positive integer) of carrier counter circuit **13**.

In the first cycle, an initial value "2" may be set in pointer circuit **12** as pointer address P, as shown in FIG. 2(A). Accordingly, pointer circuit **12** may provide a value "2" to serial-parallel conversion circuit **15**. As a result of this operation, serial-parallel conversion circuit **15** may output parallel data having a 2-bit width as data transmitted using a carrier assigned a tone ordering number @1. In more detail, serial-parallel conversion circuit **15** may output parallel data composed of the first two bits (bits a0 and a1) of the first one byte of the baseband data as tone ordering data, as shown in FIG. 2(E).

Also, in the first cycle described above, as shown in FIG. 2(A), "2" may be provided from pointer circuit **12** to bit table **11** as pointer address P. Thus, bit table **11** provides a "3" in accordance with a pointer address P being "2". The "3" may indicate a maximum tone ordering number corresponding to a 2-bit width (i.e. where a subsequent tone ordering number has an increased bit width). On the other hand, "1" may be provided from carrier counter circuit **13** as a tone ordering number. Accordingly, a matching result may not be obtained by comparator **14**. Thus, increment request signal may remain inactive (low level) as shown in FIG. 2(D). With increment request signal inactive, the contents (pointer address P) of pointer circuit **12** may not be incremented.

Therefore, in the next cycle (second cycle), pointer circuit **12** may again provide a "2" as the pointer address P to serial parallel conversion circuit **15** as shown in FIG. 2(A). As a result of this operation, serial-parallel conversion circuit **15** may provide parallel data having a 2-bit width as data transmitted using a carrier assigned a tone ordering number @2. In more detail, serial-parallel conversion circuit **15** may output parallel data composed of the two bits (bits a2 and a3) of the first one byte of the baseband data as tone ordering data, as shown in FIG. 2(E).

Also, in the second cycle described above, as shown in FIG. 2(A), "2" may be provided from pointer circuit **12** to bit table **11** as pointer address P. Thus, bit table **11** provides a "3" in accordance with a pointer address P being "2". The "3" may indicate a maximum tone ordering number corresponding to a 2-bit width (i.e. where a subsequent tone ordering number has an increased bit width). On the other hand, "2" may be provided from carrier counter circuit **13** as a tone ordering number. Accordingly, a matching result may not be obtained by comparator **14.** Thus, increment request signal may remain inactive (low level) as shown in FIG. 2(D). With increment request signal inactive, the contents (pointer address P) of pointer circuit **12** may not be incremented.

Therefore, in the next cycle (third cycle), pointer circuit **12** may again provide a "2" as the pointer address P to serial parallel conversion circuit **15** as shown in FIG. 2(A). As a result of this operation, serial-parallel conversion circuit **15** may provide parallel data having a 2-bit width as data transmitted using a carrier assigned a tone ordering number @3. In more detail, serial-parallel conversion circuit **15** may output parallel data composed of the two bits (bits a4 and a5) of the first one byte of the baseband data as tone ordering data, as shown in FIG. 2(E).

Also, in the third cycle described above, as shown in FIG. 2(A), "2" may be provided from pointer circuit **12** to bit table **11** as pointer address P. Thus, bit table **11** provides a "3" in accordance with a pointer address P being "2". The "3" may indicate a maximum tone ordering number corresponding to a 2-bit width (i.e. where a subsequent tone ordering number has an increased bit width). Also, "3" may be provided from carrier counter circuit **13** as a tone ordering number. Accordingly, a matching result may be obtained by comparator **14**. Thus, increment request signal may become active (high level) as shown in FIG. 2(D). With increment request signal active, the contents (pointer address P) of pointer circuit **12** may be incremented.

Therefore, in the next cycle (fourth cycle), pointer circuit **12** may provide a "3" as the pointer address P to serial parallel conversion circuit **15** as shown in FIG. 2(A). As a result of this operation, serial-parallel conversion circuit **15** may provide parallel data having a 3-bit width as data transmitted using a carrier assigned a tone ordering number @4. In more detail, serial-parallel conversion circuit **15** may output parallel data composed of the three bits successively following bit 5 of the first one byte of the baseband data as tone ordering data, as shown in FIG. 2(E). In this way, serial-parallel conversion circuit **15** may provide parallel data composed of bits (a6, a7, and b0, i.e. the seventh and eighth bits of the first byte and the first bit of the second byte).

Also, in the fourth cycle described above, as shown in FIG. 2(A), "3" may be provided from pointer circuit **12** to bit table **11** as pointer address P. Thus, bit table **11** provides a "7" in accordance with a pointer address P being "7". The "7" may indicate a maximum tone ordering number corresponding to a 3-bit width (i.e. where a subsequent tone ordering number has an increased bit width). On the other hand, "4" may be provided from carrier counter circuit **13** as a tone ordering number. Accordingly, a matching result may not be obtained by comparator **14**. Thus, increment request signal may remain inactive (low level) as shown in FIG. 2(D). With increment request signal inactive, the contents (pointer address P) of pointer circuit **12** may not be incremented.

Therefore, in the next cycle (fifth cycle), pointer circuit **12** may still provide a "3" as the pointer address P to serial parallel conversion circuit **15** as shown in FIG. 2(A). As a result of this operation, serial-parallel conversion circuit **15** may provide parallel data having a 3-bit width as data transmitted using a carrier assigned a tone ordering number @5. In more detail, serial-parallel conversion circuit **15** may output parallel data composed of the three bits successively following bit 1 of the second one byte of the baseband data as tone ordering data, as shown in FIG. 2(E). In this way, serial-parallel conversion circuit **15** may provide parallel data composed of bits (b1, b2, and b3).

Also, in the fourth cycle described above, as shown in FIG. 2(A), "3" may be provided from pointer circuit **12** to bit table **11** as pointer address P. Thus, bit table **11** provides a "7" in accordance with a pointer address P being "7". The "7" may indicate a maximum tone ordering number corresponding to a 3-bit width (i.e. where a subsequent tone ordering number has an increased bit width). On the other hand, "5" may be provided from carrier counter circuit **13** as a tone ordering number. Accordingly, a matching result may not be obtained by comparator **14**. Thus, increment request signal may remain inactive (low level) as shown in FIG. 2(D). With increment request signal inactive, the contents (pointer address P) of pointer circuit **12** may not be incremented.

Following this, the same operation may be repeated. When the count value of carrier counter circuit **13** matches a tone ordering number at a point where a subsequent tone ordering number has an increased transmission bit number, comparator **14** may indicate a match. In this way, pointer circuit **12** may be subsequently incremented and the transmission bit number may be increased accordingly.

As described above with a tone ordering circuit **100** according to an embodiment, transmission bit numbers assigned to carriers may not be stored for each carrier. Instead, only tone ordering numbers corresponding to points in which transmission bit numbers may subsequently change may be stored. As a result, it may be possible to reduce the scale (density) of a bit table **11** which may be used to set a transmission bit number of each carrier.

In the case of ADSL, 2 to 15-bit data may be assigned to one carrier and 256 carriers may be dealt with at a maximum. As a result, with a tone ordering circuit **100** according to an embodiment, it may be possible to create a bit table with a size of (log₂256-bit x 14-word)/(4-bit x 256-word) as compared to a conventional bit table. In this way it may be possible to create a bit table whose size may be reduced to around 10% of a conventional bit table.

Accordingly, with a tone ordering circuit **100** according to an embodiment, it may not be required to construct a bit table using a RAM and it may be possible to construct the bit table with a memory using registers or the like, for example. As a result, in the case where a tone ordering circuit **100** is constructed in a large scale integrated circuit, it may be possible to simplify a process for manufacturing the tone ordering circuit.

It should be noted here that in ADSL, 256 carriers may be dealt with at a maximum. However, in VDSL (Very-high data-rate Digital Subscriber Line), a scheme may be used in which 4,096 carriers are dealt with at a maximum. In this case, it may be possible to create a bit table using only about 1% of the capacity of a bit table in a conventional approach. Thus, it may be possible to dramatically reduce the circuit scale of a tone ordering circuit.

As described in detail above, with the technique of the present invention, it may be possible to provide a tone ordering circuit that may be capable of performing tone ordering using a small bit table as compared to a conventional approach.

It is understood that the embodiments described above are exemplary and the present invention should not be limited to those embodiments. Specific structures should not be limited to the described embodiments.

Thus, while the various particular embodiments set forth herein have been described in detail, the present invention could be subject to various changes, substitutions, and alterations without departing from the spirit and scope of the invention. Accordingly, the present invention is intended to be limited only as defined by the appended claims.

## Claims

1. A tone ordering circuit for an xDSL that converts serial data into parallel data having predetermined bit widths arranged in ascending order and the parallel data being transmittable using each of a plurality of carriers, the tone ordering circuit comprising:
a table that stores information specifying a point in time when the bit width of the parallel data changes;
a control circuit that determines a bit width of the parallel data on the basis of the information stored in the table; and
a serial-parallel conversion circuit that converts the serial data into parallel data having the bit width determined by the control circuit and outputs the parallel data.

2. The tone ordering circuit according to claim 1, wherein:
the table stores, as the information, a tone ordering number that provides the point in time when the bit width of the parallel data changes and the tone ordering number is assigned to each of the carriers in the ascending order of the bit widths of the parallel data to be transmitted using the carriers.

3. The tone ordering circuit according to claim 2, wherein:
the control circuit includes
a pointer circuit that generates a pointer address specifying a location, at which data is stored in the table, and provides the pointer address to the table;
a carrier counter circuit that counts up the tone ordering number at predetermined intervals; and
a comparator that compares the data stored at the location in the table specified by the pointer address with the tone ordering number provided by the carrier counter circuit wherein if a matching result is obtained by the comparator, the contents of the pointer circuit are incremented and the bit width of the parallel data is changed.

4. The tone ordering circuit according to claim 3, wherein:
the control circuit changes the bit width of the parallel data by supplying a value for the pointer address generated by the pointer circuit to the serial-parallel conversion circuit as the bit width of the parallel data.

5. The tone ordering circuit according to claim 4, further including:
a parallel-serial conversion circuit that converts baseband data received as parallel data into the serial data provided to the serial-parallel conversion circuit.

6. The tone ordering circuit according to claim 1, wherein:
the table includes a plurality of registers storing the information.

7. A tone ordering method for an xDSL that converts serial data into parallel data having predetermined bit widths arranged in ascending order and the parallel data being transmittable using each of a plurality of carriers, comprising the steps of:
storing information indicating a point when changing of the bit widths of the parallel data is to be performed;
determining a bit width of the parallel data on the basis of the stored information; and
converting the serial data into parallel data having the determined bit width.

8. The tone ordering method according to claim 7, wherein:
the information includes a tone ordering number that provides a point when the bit widths of the parallel data is changed and the tone ordering number is assigned to each of the carriers in the ascending order of the bit widths of the parallel data to be transmitted using the carriers.

9. The tone ordering method according to claim 7, wherein:
the step of determining a bit width includes generating a pointer address to select data from the stored information.

10. The tone ordering method according to claim 9, wherein:
the step of determining a bit width includes incrementing a tone ordering number.

11. The tone ordering method according to claim 10, wherein:
the step of determining a bit width includes comparing the tone ordering number and the selected data.

12. The tone ordering method according to claim 11, wherein:
the step of determining a bit width includes incrementing the pointer address in response to a match when comparing the tone ordering number and the selected data.

13. The tone ordering method according to claim 9, wherein:
the pointer address corresponds to the bit width of the parallel data.

14. A tone ordering circuit, including:
a serial-parallel conversion circuit receiving serial data and providing tone ordering data having a bit width based on a bit width indicator; and
a pointer circuit providing a pointer address to a table to select a data value indicating a point at which the bit width indicator changes.

15. The tone ordering circuit according to claim 14, wherein:
the pointer address is the bit width indicator.

16. The tone ordering circuit according to claim 14, further including:
a counter circuit providing a counter output wherein the bit width indicator changes incrementally in response to the counter output corresponding to the data value.

17. The tone ordering circuit according to claim 16, further including:
a comparator comparing the counter output and the data value and providing a match signal wherein the bit width indicator changes incrementally in response to the match signal indicating a match.

18. The tone ordering circuit according to claim 14, wherein:
the bit width indicator changes incrementally in an ascending order.

19. The tone ordering circuit according to claim 14, wherein:
the tone ordering circuit is part of a xDSL system.

20. The tone ordering circuit according to claim 14, wherein:
the table includes a plurality of registers and the tone ordering circuit is on an integrated circuit.
